(19) Europäisches Patentamt
European Patent Office
Office européen des brevets

(11) Publication number : 0 458 634 A2

# (12) EUROPEAN PATENT APPLICATION

(21) Application number : 91304670.2

(22) Date of filing : 23.05.91

(51) Int. Cl.[5] : **C08G 65/28**, C08G 65/32, C08F 291/00

(30) Priority : 23.05.90 JP 131243/90
26.04.91 JP 97133/91

(43) Date of publication of application :
27.11.91 Bulletin 91/48

(84) Designated Contracting States :
AT BE CH DE DK ES FR GB GR IT LI LU NL SE

(71) Applicant : ASAHI DENKA KOGYO KABUSHIKI KAISHA
2-35, Higashiogu 7-chome
Arakawa-ku Tokyo 116 (JP)

(72) Inventor : Tsuzuki, Masahide, ASAHI DENKA KOGYO K.K.
2-35 Higashiohu 7-chome
Arakawa-ku, Tokyo (JP)
Inventor : Komiya, Kaoru, ASAHI DENKA KOGYO K.K.
2-35 Higashiohu 7-chome
Arakawa-ku, Tokyo (JP)

(74) Representative : Boff, James Charles et al
c/o Phillips & Leigh 7 Staple Inn Holborn
London WC1V 7QF (GB)

## (54) Reactive modifier.

(57) A reactive modifier comprises a compound which can be expressed by the general formula :

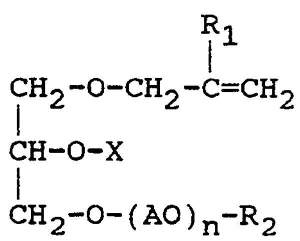

This reactive modifier excels in compatibility with vinyl monomers and yields a vinyl polymer by reacting with a vinyl monomer.

EP 0 458 634 A2

## BACKGROUND OF THE INVENTION

The present invention relates to a modifier for vinyl polymers and, more specifically, to a reactive modifier which improves the properties of a vinyl Polymer by reacting therewith or being copolymerized with vinyl monomers.

Vinyl polymers, such as polyvinyl chloride, polyvinyl acetate, and polystyrene, excel in physical and chemical properties and are easy to mold, so that they are being widely used as general purpose resins. However, the recent expansion of their range of use has made it difficult for such vinyl polymers to be sufficiently applicable in many cases with just their inherent properties alone. Some of these properties, e.g., electric characteristics and water resistance, have to be modified in accordance with the particular field to which they are applied.

A reactive modifier, disclosed in Japanese Patent Laid-Open Publication No. 1-174511, is an example of a conventional modifier for vinyl polymers. Due to its poor compatibility with monomers, this modifier cannot be used to obtain uniform corolymers.

Japanese Patent Laid-Open Publication No. 1-174512 discloses another reactive modifier, in which an attempt has been made to overcome the above compatibility problem. Its compatibility with monomers, however, is still short of satisfactory. Moreover, its polymer modifying effect is also unsatisfactory.

## SUMMARY OF THE INVENTION

It is accordingly an object of the present invention to provide an excellent reactive modifier which has favorable compatibility with monomers and which provides an excellent polymer modifying effect.

In accordance with this invention, there is provided a reactive modifier comprising a compound which can be represented by the general formula:

```
                  R1
                  |
CH2-O-CH2-C=CH2
|
CH-O-X                          (I)
|
CH2-O-(AO)n-R2
```

[where A represents an alkylene group of a carbon number ranging from 2 to 4; $R_1$ represents a hydrogen atom or a methyl group; $R_2$ represents a hydrocarbon group or an acyl group of a carbon number ranging from 1 to 24; n represents a number ranging from 0 to 50 (preferably, n = 0); and X represents the expression: $-(AO)_m-H$ (where A represents an alkylene group of a carbon number ranging from 2 to 4, and m represents a number ranging from 1 to 100), the expression: $-(AO)_k-SO_3M$ (where A represents an alkylene group of a carbon number ranging from 2 to 4; k represents a number ranging from 1 to 50; and M represents a hydrogen atom, an alkali metal, an alkaline earth metal, ammonium, or organic ammonium.), or the expression:

```
        O
        ||
-(AO)q-P-OM1
        |
        OM2
```

(where A represents an alkylene group of a carbon number ranging from 2 to 4; q represents a number ranging

from 0 to 50; and $M_1$ and $M_2$ represent a hydrogen atom, an alkali metal, an alkaline earth metal, ammonium, or organic ammonium, $M_1$ and $M_2$ being identical with or different from each other.)]

DETAILED DESCRIPTION OF THE INVENTION

The reactive modifier of the present invention has in its molecules double bonds allowing radical polymerization and is adapted to be grafted into a vinyl polymer or copolymerized with vinyl monomers during copolymerization thereof, thereby modifying the properties of the vinyl polymer.

Further, due to the fact that the nonionic or anionic hydrophilic group represented by X in general formula (I) contains alkylene oxide chains, i.e., $(AO)_m$, $(AO)_k$, or $(AO)_q$, the reactive modifier of the present invention exhibits an excellent compatibility with monomers and, at the same time, allows easy adjustment of hydrophilicity by appropriately selecting the length of the alkylene oxide chains and the kind of alkylene oxide constituting the chains in accordance with the purpose of modification and the compatibility with monomers.

Thus, the reactive modifier of this invention helps to attain an improvement both in the compatibility with monomers and the polymer modifying effect.

The reactive modifier of the present invention can be manufactured by, for example, a method in which (meth)allylglycidyl ether, more preferably allylglycidyl ether, is allowed to react with a hydroxyl compound which can be represented by the general expression: $HO-(AO)_n-R_2$ (where $R_2$, A and n represent the same as above) under the presence of a well-known catalyst, such as tertiary amine, quaternary ammonium salt, boron trifluoride ether complex salt, zinc borofluoride, tin tetrachloride, aluminum chloride, sodium hydroxide, or potassium hydroxide, at a temperature of 50°C to 160°C for a period of, e.g., 3 to 20 hours until there is no epoxy group, thereby obtaining a compound which can be represented by the general expression:

```
                R1
                |
CH2-O-CH2-C=CH2
|
CH-O-H                          (II)
|
CH2-O-(AO)n-R2
```

(where A, $R_1$ and $R_2$ have the same meanings as in the above).

Examples of the hydrocarbon group of a carbon number ranging from 1 to 24 indicated by the above symbol $R_2$ include a straight- or branching-chain alkyl group or alkenyl group of a carbon number ranging from 1 to 24 which may be replaced by an aryl group such as methyl group, ethyl group, propyl group, isopropyl group, butyl group, sec-butyl group, t-butyl group, pentyl group, t-amyl group, hexyl group, heptyl group, octyl group, 2-ethylhexyl group, nonyl group, decyl group, dodecyl group, lauryl group, tridecyl group, myristyl group, stearyl group, oleyl group, cetyl group, benzyl group, or phenethyl group, and an aryl group which may be replaced by an alkyl group, an alkaryl group or an aralkyl group, such as phenyl group, o-, m-, p-, or mixed cresoyl group, xylenoyl group, propyl phenyl group, isopropyl phenyl group, butyl phenyl group, sec-butyl phenyl group, t-butyl phenyl group, di-t-butyl phenyl group, t-amyl phenyl group, octyl phenyl group, 2-ethyl hexyl phenyl group, dioctyl phenyl group, nonyl phenyl group, dinonyl phenyl group, dodecyl phenyl group, methyl diphenyl group, trimethyl diphenyl group, styrenated phenyl group, styrenated cresoyl group, styrenated xylenoyl group, or benzylated phenyl group. These, however, should not be construed as restrictive.

Examples of the acyl group of a carbon number of 1 to 24 represented by the above symbol $R_2$ include acid residues such as caprylic acid residue, pelargonic acid residue, capric acid residue, undecanoic acid residue, lauric acid residue, myristic acid residue, palmitic acid residue, stearic acid residue, linoleic acid residue, and arachic acid residue, or reactive derivatives consisting of acid halide residues, acid anhydride residues, etc. of these acids. These, however, should not be construed as restrictive.

Further, to add thereto an nonionic hydrophilic group, the compound expressed by general formula (II) is allowed to react with an alkylene oxide of a carbon number of 2 to 4 under the presence of a catalyst such as

sodium hydroxide, potassium hydroxide, or boron trifluoride, using a pressure reactor at a temperature of 80 to 160°C, thereby obtaining a compound which can be expressed by the general formula:

$$\begin{array}{l} \qquad\qquad\quad R_1 \\ \qquad\qquad\quad | \\ CH_2-O-CH_2-C=CH_2 \\ | \\ CH-O-(AO)_m-H \\ | \\ CH_2-O-(AO)_n-R_2 \end{array} \qquad (III)$$

(where A, n, m, $R_1$ and $R_2$ represent the same as above).

Examples of the alkylene oxide used include ethylene oxide, propylene oxide, and butylene oxide. It is possible to employ only one of them or to use two or more them in combination. Further, the alkylene oxide may be added in a block-like manner.

It is desirable that the polyoxyalkylene chain $-(AO)_m$ in general formula (III) contain a polyoxyethylene chain, the content thereof being preferably in the range of 10 to 100 wt %.

Further, to impart thereto an anionic hydrophilic group, the compound expressed by general formula (III) is sulfated and anionized by the usual method using sulfuric acid, sulfuric anhydride, chlorosulfonic acid, sulfamic acid, etc, thereby obtaining a compound which can be expressed by the general formula:

$$\begin{array}{l} \qquad\qquad\quad R_1 \\ \qquad\qquad\quad | \\ CH_2-O-CH_2-C=CH_2 \\ | \\ CH-O-(AO)_k-SO_3M \\ | \\ CH_2-O-(AO)_n-R_2 \end{array} \qquad (IV)$$

(where A, n, k, M, $R_1$ and $R_2$ represent the same as above).

Alternatively, the compound expressed by general formula (II) or (III) is phosphated and anionized by the usual method using phosphorous pentaoxide, polyphosphoric acid, etc., thereby obtaining a compound which can be expressed by the general formula:

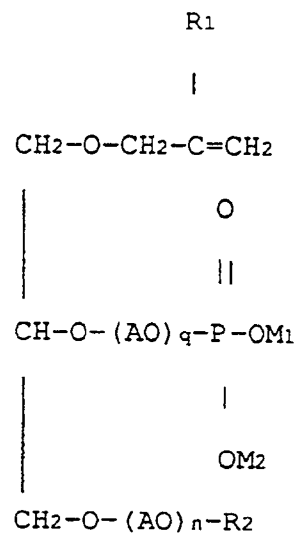

(V)

(where A, $R_1$, $R_2$, n, q, $M_1$ and $M_2$ represent the same as above).

Examples of the organic ammonium represented by M, $M_1$ and $M_2$ in general formulae (IV) and (V) include monoalkanol ammonium, dialkanol ammonium, trialkanol ammonium, monoalkyl ammonium, dialkyl ammonium, and trialkyl ammonium. Preferably, though not to be construed as restrictive, the organic ammonium used may be monomethanol ammonium, monoethanol ammonium, monopropanol ammonium, monobutanol ammonium, monoisopropanol ammonium, trimethanol ammonium, monoethanol monomethanol ammonium, diethanol ammonium, monoethanol dimethanol ammonium, monoethyl ammonium, diethyl ammonium, trimethyl ammonium, diethyl monomethanol ammonium, or monoethanol dimethyl ammonium.

Particularly preferable as M, $M_1$ and $M_2$ in general formulae (IV) and (V) are ammonium, monoethanol ammonium, diethanol ammonium, monoisopropanol ammonium, diethyl ammonium, and monoisopropyl ammonium.

Examples of polymers to be modified by the reactive modifier of the present invention include polymers of the following vinyl monomers:

Vinyl esters such as vinyl acetate; styrene or styrene derivatives; (meth)acrylic esters such as ethyl (meth)acrylate and butyl (meth)acrylate; $\alpha,\beta$ unsaturated carboxylic acids such as (meth)acrylic acid and crotonic acid or salts thereof; $\alpha,\beta$ unsaturated amides such as (meth)acrylic amide, N-methylacrylic amide, and N-methylolacrylic amide; $\alpha$-olefins such as (meth)acrylonitrile, vinyl chloride, vinylidene chloride, ethylene, and propylene; conjugate dienes such as butadiene; alkyl vinyl ethers; alkyl vinyl ketones; maleic anhydride; maleates; itaconic esters; and crosslinking divinyl compounds such as divinyl benzene, ethylene glycol dimethacrylate, and methylene bisacrylic amide.

However, the vinyl monomers that can be used are not particularly restricted to the above.

The reactive modifier of the present invention can be used in various amounts in accordance with the kind of monomers, purpose of modification, properties required, etc For example, 0.1 to 95 wt % of it may be used with respect to the monomer. In particular, in a case where a water soluble resin with low hydrophilicity is to be converted to a polymer with high hydrophilicity, it is desirable that 10 to 80 wt % of the reactive modifier be used with respect to the monomer.

For other uses, for example, in cases where it is used for the purpose of attaining an improvement in terms of water resistance, adhesive property, antistatic property, defogging property, dye-affinity, film forming property, weather resistance, anti-blocking property, etc., or in a case where it is used with a view to imparting compatibility to a polymer for polymer alloys, it is desirable that the amount of the reactive agent used be in the range of 0.1 to 20 wt% with respect to the monomer.

## EXAMPLES

Methods of the present invention are illustrated with reference to the following examples, but the invention is not intended to be limited only to these following examples.

Example 1

(i) In an four-necked flask of 1-liter capacity, equimolar reaction was effected between nonyl phenol (440g) and allylglycidyl ether (228g) at a temperature of 90±5°C using NaOH as catalyst.
(ii) 334g of the product obtained in (i) was fed into a pressure reactor of 1-liter capacity and 220g of ethylene oxide was added thereto over a period of 6 hours at 130°C, 1.5kg/$cm^2$, and the reaction mixture was maintained at that temperature and pressure for 4 hours to complete addition reaction, thereby obtaining a reactive modifier.

Example 2

(i) A reaction identical with that of Example 1 was effected except for the fact that methallylglycidyl ether was used instead of allylglycidyl ether.
(ii) The product obtained in (i) was fed into a pressure reactor and 5 moles of ethylene oxide was added thereto per mole thereof. Afterwards, 10 moles of propylene oxide was added thereto, thereby obtaining a reactive modifier.

Example 3

(i) A reaction identical with that of Example 1 was effected except for the fact that coconut fatty acid was used instead of nonyl phenol.
(ii) The product obtained in (i) was fed into a pressure reactor and 10 moles of ethylene oxide was added thereto per mole thereof, thereby obtaining a reactive modifier.

Example 4

(i) A reaction identical with that of Example 1 was effected except for the fact that an excessive amount of a secondary alcohol of a carbon number of 12 to 14 (mixture ratio $C_{12}$:$C_{13}$:$C_{14}$ = 1:2:1) with 5 moles of ethylene oxide added thereto was used instead of nonyl phenol.
(ii) The product obtained in (i) was fed into a pressure reactor and 5 moles of ethylene oxide and 10 moles of propylene oxide were added at random thereto per mole thereof, thereby obtaining a reactive modifier.

Example 5

(i) A reaction identical with that of Example 1 was effected except for the fact that distyrenated phenol was used instead of nonyl phenol.
(ii) The product obtained in (i) was fed into a pressure reactor and 5 moles of propylene oxide was added thereto per mole thereof. Afterwards, 10 moles of ethylene oxide was added thereto, thereby obtaining a reactive modifier.

Example 6

A reactive modifier obtained in the same way as in Example 1 was sulfated by the usual method using chlorosulfonic acid and was neutralized by monoethanol amine, thereby obtaining a reactive modifier.

Example 7

A reactive modifier obtained in the same way as in Example 1 was sulfated into an ammonium salt by the usual method using sulfamic acid, thereby obtaining an anionic reactive modifier.

Example 8

A reactive modifier obtained in the same way as in Example 1 was phosphated into an ammonium salt by the usual method using phosphorous pentaoxide, thereby obtaining an anionic reactive modifier.

Example 9

A reactive modifier obtained in the same way as in Example 1 was phosphated into a monoethanol amine

salt by the usual method using phosphorous pentaoxide, thereby obtaining an anionic reactive modifier.

Example 10

A reactive modifier was obtained in the same way as in Example 5, except for that 3 moles of butylene oxide was used instead of 5 moles of propylene oxide.

Comparison Example 1

(i) A reaction identical with that of Example 1 was effected except for the fact that an addition compound of nonyl phenol with 30 moles of ethylene oxide added thereto was used instead of nonyl phenol. The resulting compound is (II), wherein $R_2$ is a nonyl phenol group and AO is an oxyethylene group.
(ii) The product obtained in (i) was used as it was as a reactive modifier.

(Evaluation in Compatibility with Monomers)

To evaluate the above modifiers in terms of compatibility with monomers, 2g of each of the modifiers of Examples 1 through 10 and Comparison Example 1 was mixed with 10g each of styrene, methacrylic acid, vinyl acetate, and acrylonitrile.

The evaluation results were as shown in Table 1.

Table 1

| Monomer | Styrene | Methacrylic acid | Vinyl acetate | Acrylonitrile |
|---|---|---|---|---|
| Example 1 | ◎ | ◎ | ◎ | ◎ |
| Example 2 | ◎ | ◎ | ◎ | ◎ |
| Example 3 | ◎ | ◎ | ◎ | ◎ |
| Example 4 | ◎ | ◎ | ◎ | ◎ |
| Example 5 | ◎ | ◎ | ◎ | ◎ |
| Example 6 | ◎ | ◎ | ◎ | ◎ |
| Example 7 | ◎ | ◎ | ◎ | ◎ |
| Example 8 | ◎ | ◎ | ◎ | ◎ |
| Example 9 | ◎ | ◎ | ◎ | ◎ |
| Example 10 | ◎ | ◎ | ◎ | ◎ |
| Comp. Ex.1. | Δ | Δ | Δ | Δ |

In the table, the symbol ◎ indicates complete dissolution and the symbol Δ indicates partial dissolution or partial dispersion.

Modification Example 1

100g of xylene was fed into a reactor container equipped with a reflex condenser, an agitator, a dropping funnel, and a thermometer, replacing the system atmosphere with nitrogen gas.

Apart from this, a mixture solution was prepared with respect to each of the modifiers obtained in Examples

1 to 9 and Comparison Example 1, each solution containing 150g of styrene, 7.5g of the modifier, 2g of benzoyl peroxide, and 1g of ditertiary butyl peroxide. Each solution was continuously trickled down into the reactor container at a reaction temperature of 130°C for a period of two hours. Further, a mixture solution containing 10g of xylene, 0.5g of benzoyl peroxide, and 0.5g of ditertiary butyl peroxide was added dropwise to effect solution for two hours. Afterwards, the reactor was cooled and 90g of xylene was added thereto, thereby obtaining a polymer solution.

A 0.2mm thick polymer film was prepared by the usual method from each of the polymer solutions obtained. Each polymer film was evaluated in terms of water resistance, defogging property, and antistatic property.

The evaluation results were as shown in Table 2.

Method of Measurement/Evaluation

Water Resistance of the Film:

1g of the polymer film was put in boiling water to boil it for 24 hours, and was then dried at 105°C for two hours. The film was observed for any change taking place during these processes.

◎: no change, ○: partial fogging on the film surface, Δ: partial deformation of the film, X: entire deformation of the film

Defogging Property of the Film:

The contact angle of water with respect to the polymer film was measured.

Antistatic Property of the Film:

The surface resistivity of the polymer film was measured after allowing it to stand, for 24 hours, in an atmosphere with a humidity of 45% and at a temperature of 20°C.

<u>Modification Example 2</u>

100g of xylene was fed into a reactor container equipped with a reflux condenser, an agitator, a dropping funnel, and a thermometer, replacing the system atmosphere with nitrogen gas.

Apart from this, a mixture solution was prepared with respect to each of the modifiers obtained in Examples 1, 7 and 9, each solution containing 75g of acrylic acid 2-ethylhexyl, 7.5g of the modifier, 2g of benzoyl peroxide, and 0.5g of ditertiary butyl peroxide. Each solution was continuously trickled down into the reactor container at a reaction temperature of 130°C for a period of two hours. Further, a mixture solution containing 10g of xylene, 0.5g of benzoyl peroxide, and 0.5g of ditertiary butyl peroxide was added dropwise to effect solution for two hours. Afterwards, the reactor was cooled and 90g of xylene was added thereto, thereby obtaining a polymer solution.

A 0.2 mm thick polymer film was prepared by the usual method from each of the polymer solutions obtained. Each polymer film was evaluated for its properties in the same manner as in Modification Example 1.

The evaluation results were as shown in Table 2.

Table 2

| | Modifier | Water resistance | Contact angle (°) | Surface resistivity (Ω) |
|---|---|---|---|---|
| Modification Ex. 1 | Example 1 | ◎ | 35.7 | $4.8 \times 10^{11}$ |
| | Example 2 | ◎ | 33.9 | $4.6 \times 10^{11}$ |
| | Example 3 | ◎ | 34.2 | $4.0 \times 10^{11}$ |
| | Example 4 | ◎ | 36.3 | $3.1 \times 10^{11}$ |
| | Example 5 | ◎ | 34.5 | $5.5 \times 10^{11}$ |
| | Example 6 | ◎ | 34.3 | $4.3 \times 10^{11}$ |
| | Example 7 | ◎ | 35.1 | $5.2 \times 10^{11}$ |
| | Example 8 | ◎ | 35.3 | $5.1 \times 10^{11}$ |
| | Example 9 | ◎ | 34.1 | $4.6 \times 10^{11}$ |
| | Example 10 | ◎ | 35.0 | $5.3 \times 10^{11}$ |
| | Comp.Ex.1 | Δ | 43.6 | $8.2 \times 10^{12}$ |
| Modification Ex. 2 | Example 1 | ◎ | 30.4 | $1.5 \times 10^{11}$ |
| | Example 7 | ◎ | 31.5 | $2.1 \times 10^{11}$ |
| | Example 9 | ◎ | 32.1 | $2.3 \times 10^{11}$ |

The advantage of the reactive modifier of the present invention consists in its excellent compability with monomers.

By virtue of its excellent compatibility with monomers, the reactive modifier of the present invention helps to obtain uniform copolymers, thus providing an excellent modification effect.

Further, the reactive modifier of the present invention allows hydrophilicity adjustment with ease according to the kind of monomer and the purpose of modification, with the result that it can be widely used.

A polymer modified by the reactive modifier of the present invention exhibits improved properties in terms of water resistance, antistatic property, adhesive property, defogging property, staining property, film forming property, weather resistance, etc. as compared to ones modified by well-known modifiers.

Further, the reactive modifier of the present invention helps to impart compatibility to polymers for polymer alloys.

## Claims

1. A reactive modifier comprising a compound which can be represented by the general formula:

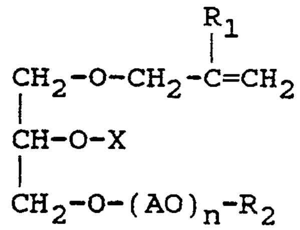

(I)

[where A represents an alkylene group of a carbon number ranging from 2 to 4; $R_1$ represents a hydrogen atom or a methyl group; $R_2$ represents a hydrocarbon group or an acyl group of a carbon number ranging from 1 to 24; n represents a number ranging from 0 to 50; and
X represents:-
the expression: $-(AO)_m-H$ (where A represents an alkylene group of a carbon number ranging from 2 to 4, and m represents a number ranging from 1 to 100),
the expression: $-(AO)_k-SO_3M$ (where A represents an alkylene group of a carbon number ranging from 2 to 4; k represents a number ranging from 1 to 50; and M represents a hydrogen atom, an alkali metal, an alkaline earth metal, ammonium, or organic ammonium),
or the expression:

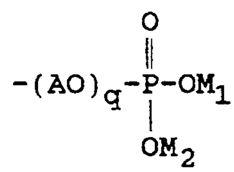

(where A represents an alkylene group of a carbon number ranging from 2 to 4; q represents a number ranging from 0 to 50; and $M_1$ and $M_2$ represent a hydrogen atom, an alkali metal, an alkaline earth metal, ammonium, or organic ammonium, $M_1$ and $M_2$ being identical with or different from each other.)]

2. A reactive modifier as claimed in Claim 1 wherein $-(AO)_k-$, $-(AO)_q-$ or $-(AO)_m-$ is a (poly)oxyalkylene chain.

3. A reactive modifier as claimed in Claim 2 wherein $-(AO)_k-$, $-(AO)_2-$ or $-(AO)_m-$ is a (poly)oxyethylene chain.

4. A reactive modifier as claimed in any preceding claim wherein M is, or $M_1$ and $M_2$, are ammonium or organic ammonium.

5. A reactive modifier as claimed in Claim 4 wherein M is, or $M_1$ and $M_2$ are, selected from a group consisting of ammonium, monoethanol ammonium, diethanol ammonium, monoisopropanol ammonium, diethyl ammonium, and monoisopropyl ammonium.

6. A reactive modifier as claimed in Claim 1 wherein n is O.

7. A process for producing a reactive modifier for vinyl polymers, comprising the steps of:-
(i) reacting a hydroxyl compound of general formula $HO-(AO)_n-R_2$ (where $R_2$, A and n represent the same as claimed in any preceding claim) in the presence of catalyst with (meth)allylglycidyl ether or allyglycidyl ether to form an intermediate product.
(ii) reacting the intermediate product in the present of catalyst with an alkylene oxide of a carbon number of 2 to 4 to introduce a nonionic hydrophilic group.

8. A process for producing a reactive modifier for vinyl polymers, in which the reaction product in the step (ii) of claim 7 is further sulphated or phosphated to introduce an anionic hydrophilic group.

9. A process for producing a reactive modifier for vinyl polymers in which said intermediate product in the step (i) of claim 7 is phosphated to introduce anionic hydrophilic group.

10. A vinyl polymer produced by using a reactive modifier as claimed in any of claims 1 to 6, or the result of the process of any of claims 7 to 8.